# EUROPEAN PATENT APPLICATION

(11) **EP 1 251 376 A2**
(43) Date of publication of application: **23.10.2002**
(21) Application number: 02008658.3
(22) Date of filing: 17.04.2002
(51) Int. Cl.: G02B 6/42, G02B 6/38, H05K 9/00, H01R 13/658

(54) **Optical connector, shield casing and optical connector device**

(30) Priority: 19.04.2001 JP 2001121031; 20.04.2001 JP 2001122654
(71) Applicant: Autonetworks Technologies, Ltd., Nagoya-shi, Aichi (JP); SUMITOMO WIRING SYSTEMS, Ltd., Yokkaichi-shi, Mie (JP); SUMITOMO ELECTRIC INDUSTRIES, LTD., Osaka-shi, Osaka (JP)
(72) Inventor: Nakura, Yuji, c/o AutoNetworks Technologies, Ltd., Nagoya-shi, Aichi (JP); Imazu, Hitoshi, c/o AutoNetworks Tech., Ltd., Nagoya-shi, Aichi (JP); Asada, Kazuhiro, c/o AutoNetworks Tech., Ltd., Nagoya-shi, Aichi (JP)
(74) Representative: Winter, Brandl, Fürniss, Hübner, Röss, Kaiser, Polte Partnerschaft

(57) **Abstract**

A shield casing (20) is received and held in a connector housing made of a resin. The shield casing includes a casing body portion (21) for receiving an optical element therein, a guide sleeve portion (23) which guides an optical fiber toward the element body portion (Da), and a radiating portion (25) exposed to the exterior of the connector housing. The casing body portion, the guide sleeve portion and the radiating portion are formed integrally on this casing body portion. The whole of the shield casing is made of a metal material such as aluminum and an aluminum alloy. The shield casing further includes screw-fastening fixing piece portions (30) for fixing the shield casing to a mounting board (P). The shield casing is connected to a ground wiring circuit (Pe) on the mounting board via the screw-fastening fixing piece portions.

## Description

### BACKGROUND OF THE INVENTION

### Field of the Invention

This invention relates to an optical connector, a shield casing, and an optical connector device used in the field of optical communication for an OA equipment, an FA equipment, an on-vehicle equipment and so on.

### Background Art

In an optical connector of the type in which an optical element for effecting the photoelectric conversion is received in a connector housing, it is necessary to provide countermeasures for reducing the influence of electromagnetic noises, applied from the exterior to the interior optical element, and the influence of electromagnetic noises applied from the interior optical element to the exterior. Particularly in those optical connectors used in an automobile or the like which provides an electromagnetically poor environment, there has been a great demand for such electromagnetic-noise countermeasures.

In one conventional optical connector provided with electromagnetic-noise countermeasures, an optical element is received in a shield casing made of an electrically-conductive resin, and this shield casing is received in a connector housing.

However, for example, when the above conventional optical connector was subjected to very intense electromagnetic noises, the electromagnetic-noise countermeasures, achieved only by the reception of the optical element in the shield casing made of the electrically-conductive resin, was inadequate, and there was a fear that a malfunction of an optical element or the like was encountered. In addition, usually, a window portion is formed in the shield casing, and a light-emitting surface or a light-receiving surface of the optical element is exposed to the exterior through this window portion so that the light-emitting surface or the light-receiving surface can be disposed in opposed relation to an end of an optical fiber held in a mating optical connector. Therefore, there was a fear that external electromagnetic noises intruded through this window portion to reach the optical element.

And besides, in the above optical connector, the optical element was surrounded by the resin, and therefore heat, generated by the optical element, could not be efficiently radiated to the exterior, and there was a fear that a shortened lifetime, breakage and so on of the optical element were encountered particularly when the optical connector was used in an environment in which the temperature of the atmosphere was high.

Incidentally, among conventional optical connectors holding an optical fiber, there is the type in which a ferrule, fitted on an end portion of the optical fiber, is held in a connector housing. When this optical connector is connected to a mating optical connector, receiving an optical element therein, the ferrule is inserted into a guide sleeve portion formed on the mating optical connector, so that the end of the optical fiber is guided toward a light-emitting surface or a light-receiving surface of the optical element. As a result, the optical fiber is optically coupled to the optical element.

In the above optical connector, when it is intended to enhance the precision of alignment of the optical axis of the optical fiber with the optical axis of the optical element, the ferrule is made of a metal material.

In this case, however, when this optical connector is connected to the mating optical connector, the metal ferrule is not grounded at all, and remains in an electrically-floating condition, and besides the end of the ferrule is disposed in the vicinity of the light-receiving or the light-emitting portion of the optical element held in the mating optical connector. Therefore, when the ferrule functions as a kind of antenna for surrounding electromagnetic noises, this ferrule absorbs the electromagnetic noises, and then radiates them in the vicinity of the optical element, and therefore there was a fear that adverse effects, such as a malfunction of the optical element, were encountered.

### SUMMARY OF THE INVENTION

Therefore, it is an object of this invention to provide an optical connector, as well as a shield casing, which is excellent both in electromagnetic noise-blocking properties and in heat-radiating properties.

It is another object of this invention to provide an optical connector device in which an optical connector is provided with a ferrule made of an electrically-conductive material, and electromagnetic waves, radiated from this ferrule, can be suppressed.

The above problems have been solved by an optical connector which comprises a connector housing having a casing receiving recess formed therein; and a shield casing including a casing body portion, which can receive an element body portion of an optical element therein, and is received and held in the casing receiving recess, a guide sleeve portion which is formed integrally on the casing body portion, and guides an optical fiber toward an optical coupling portion of the element body portion received in the casing body portion, and a radiating portion which is formed integrally on the casing body portion, and is disposed to be exposed to the exterior of the connector housing, the whole of the shield casing being made of a metal material.

According to another aspect of this invention, screw-fastening fixing piece portions for being screw-fastened to a mounting board may be formed integrally on the shield casing. According to another aspect of this invention, a beforehand-threaded screw hole may be formed in each of the screw-fastening fixing piece portions.

According to another aspect of this invention, there may be adopted a construction in which the radiating portion includes a plurality of radiating projections projecting outwardly.

According to another aspect of this invention, the element body portion is received in the casing body portion, and a thermally-conductive interposing material may be interposed between an outer surface of the element body portion and an inner surface of the casing body portion.

According to another aspect of this invention, a shield casing is adapted to be incorporated in a connector housing, and this shield casing includes a casing body portion, which can receive an element body portion of an optical element therein, a guide sleeve portion which is formed integrally on the casing body portion, and guides an optical fiber toward an optical coupling portion of the element body portion received in the casing body portion, and a radiating portion which is formed integrally on the casing body portion, and is disposed to be exposed to the exterior of the connector housing, and the whole of the shield casing is made of a metal material.

Another aspect of this invention is an optical connector device, which comprises an optical fiber-side optical connector including a ferrule, which is made of an electrically-conductive material, and is adapted to be fitted on an end portion of an optical fiber, and a ferrule-holding housing holding the ferrule; and an optical element-side optical connector having a shield casing received in an element-receiving housing; wherein the shield casing includes a casing body portion for receiving an optical element therein, and a guide sleeve portion which is formed integrally on the casing body portion, and has such a generally tubular shape as to enable the ferrule to be inserted thereinto, and can guide an end surface of an optical fiber, held in the ferrule, toward a light-emitting or a light-receiving surface of the optical element received in the casing body portion; and wherein when the optical fiber-side optical connector is connected to the optical element-side optical connector, the ferrule is inserted into the guide sleeve portion to be electrically connected to the guide sleeve portion, so that the ferrule is grounded via the shield casing.

According to another aspect of this invention, the whole of the shield casing may be made of a metal material or an electrically-conductive resin, imparting electrical conductivity even to a surface thereof, or the shield casing may be made of an insulative resin having metal plating applied to a surface thereof.

According to another aspect of this invention, in the case where the optical element-side optical connector is adapted to be mounted on and fixed to a mounting board, a screw-fastening fixingpiece portion, which can be screw-fastened to the mounting board, and can be electrically connected to a grounding wiring circuit formed on the mounting board, or a soldering portion, which can be soldered to the grounding wiring circuit formed on the mounting board, may be formed on the shield casing.

### BRIEF DESCRIPTION OF THE DRAWINGS

FIG. 1 is a perspective view showing a preferred embodiment of an optical connector of the present invention.

Fig. 2 is an exploded, perspective view of an optical connector of the present invention.

Fig. 3 is a cross-sectional view showing a condition in which the above optical connector is connected to a mating optical connector.

Fig. 4 is a partly-broken, rear view showing a condition in which the above optical connector is mounted on and fixed to a mounting board.

Fig. 5 is a cross-sectional view showing another preferred embodiment of an optical connector device of the present invention.

### DETAILED DESCRIPTION OF THE PREFERRED EMBODIMENTS

### - The First Preferred Embodiment -

A preferred embodiment of an optical connector of the present invention will now be described.

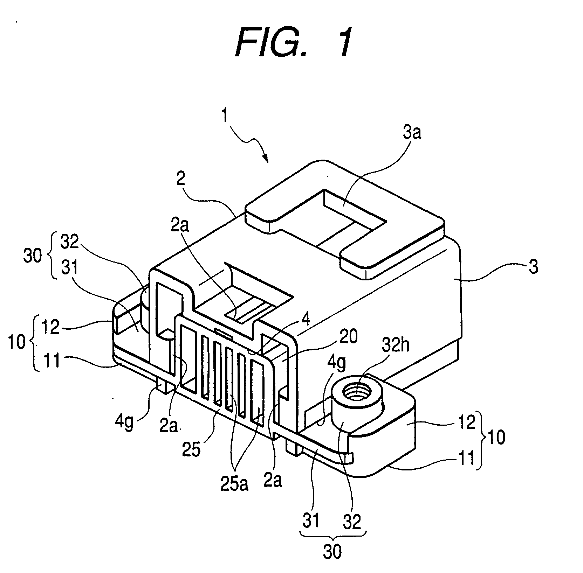

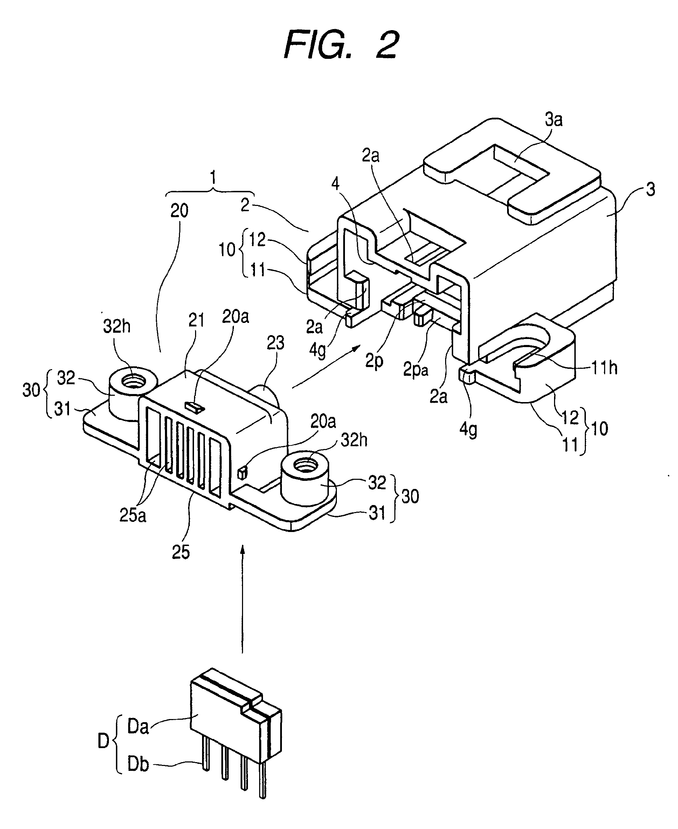

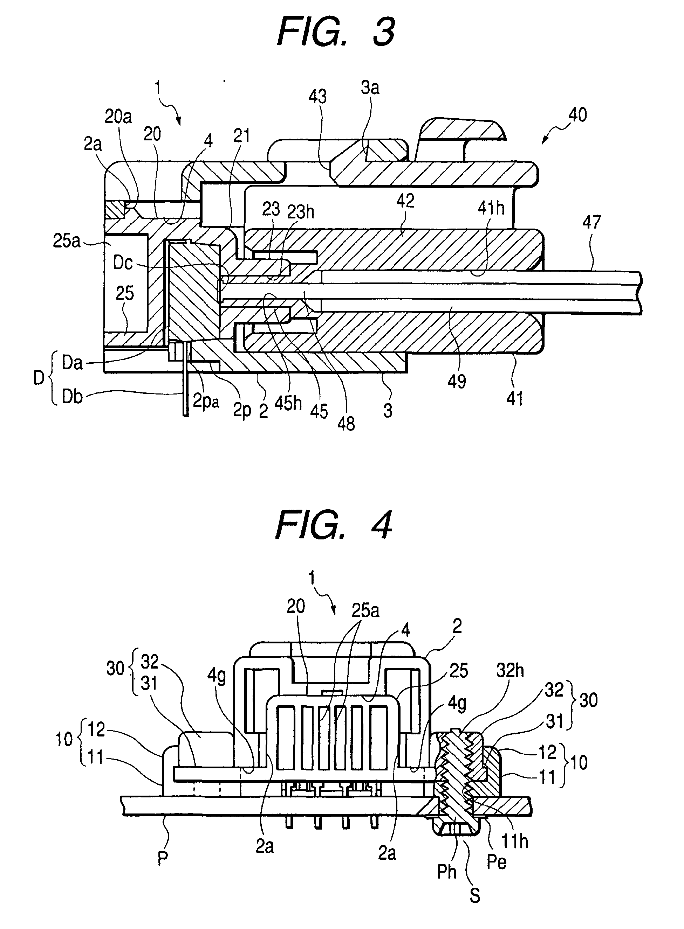

As shown in Figs. 1 to 4, this optical connector 1 is so constructed as to be connected to a mating optical connector 40 (see Fig. 3) holding an optical fiber 48.

The optical connector 40 is made of an insulative resin or the like, and includes a housing body portion 41, and a ferrule portion 45 formed integrally with this housing body portion, as shown in Fig. 3.

A cord receiving hole 41h is formed in the housing body portion 41, and an optical fiber cord 47 can be passed through and held in this cord receiving hole 41h. The ferrule portion 45 is formed in a projected manner at a front end portion of the housing body portion 41, and a fiber receiving hole 45h is formed in the ferrule portion 45, and is disposed on a line of extension of the cord receiving hole 41h, and the optical fiber 48, exposed at an end portion of the optical fiber cord 47, can be passed through and held in this fiber receiving hole 45h. When the optical fiber cord 47, having the optical fiber 48 exposed at the end portion thereof, is inserted into the cord receiving hole 41h from the rear side of the housing body portion 41, the optical fiber 48, exposed at the end portion, is received and held in the fiber receiving hole 45h, and at the same time a sheath 49, disposed adjacent to this exposed optical fiber portion, is received and held in the cord receiving hole 41h. The optical fiber 48 is thus inserted and held in the ferrule portion 45, and in this condition an end surface of the optical fiber 48 is processed into a specular surface at the distal end of the ferrule 45.

A protective tubular portion 42 is formed at the front end portion of the housing body portion 41 in surrounding relation to the ferrule portion 45. A retaining piece portion 43, which is engageable with an engagement portion 3a of the optical connector 1, is formed at an upper portion of the housing body portion 41.

As shown in Figs. 1 to 4, the optical connector 1 comprises a connector housing 2, and a shield casing 20.

The shield casing 20 includes a casing body portion 21, and a guide sleeve portion 23 and a radiating portion 25 are formed integrally with this casing body portion, and the whole of this shield casing is made of a metal material such as aluminum and an aluminum alloy.

The casing body portion 21 is so formed as to receive an element body portion Da of an optical element D therein, and this casing body portion is received and held in a casing receiving recess 4 formed in the connector housing 2. In this embodiment, the casing body portion 21 has a generally box-shape with an open bottom, and when the element body portion Da of the optical element D is inserted into this casing body portion from the bottom opening thereof, the whole of the element body portion Da is received within the casing body portion 21. In this condition, lead portions Db, extending downwardly from a lower surface of the element body portion Da, extend downwardly through the bottom opening in the casing body portion 21. Preferably, in order that heat, generated by the element body portion Da, can be easily transferred to the casing body portion 21, an inner surface of the casing body portion 21 is so shaped as to be held in intimate contact with an outer surface of the element body portion Da, or a thermally-conductive interposing material, such as an adhesive and a filler having good thermal conductivity, is filled in a gap between the outer surface of the element body portion Da and the inner surface of the casing body portion 21.

The guide sleeve portion 23 guides the optical fiber 48 toward an optical coupling portion (a light-emitting portion or a light-receiving portion) Dc of the element body portion Da received in the casing body portion 21. In this embodiment, this guide sleeve portion is in the form of a short, generally-cylindrical tube projecting from a front surface of the casing body portion 21. A guide hole portion 23h is formed in the guide sleeve portion 23, and extends forwardly of the optical coupling portion Dc of the element body portion Da received in the casing body portion 21. The ferrule portion 45 of the mating optical connector 40 can be inserted into the guide hole portion 23h. When the distal end portion of the ferrule portion 45 is inserted into the guide sleeve portion 23, the optical fiber 48 within the ferrule portion 45 is guided toward the optical coupling portion Dc of the element body portion Da within the casing body portion 21. When the ferrule portion 45 is inserted into the deepest portion of the guide sleeve portion 23, the end surface of the optical fiber 48, exposed to the distal end of the ferrule portion 45, is disposed in opposed relation to the optical coupling portion Dc, so that the optical fiber 48 is optically coupled to the optical element D.

When the casing body portion 21 is received in the casing receiving recess 4, the radiating portion 25 is exposed to the exterior of the connector housing 2.

In this embodiment, the radiating portion 25 is formed at the casing body portion 21 over an entire area of the rear surface thereof.

The radiating portion 25 comprises a plurality of radiating projections 25a projecting outwardly. The radiating projections 25a function to increase the surface areas of those portions of the radiating portion 25 exposed to the exterior, thereby enhancing its radiating effect. In this embodiment, the radiating projections 25a are a plurality of parallel, spaced fin-like projections. The radiating projections 25a may be a plurality of (that is, a forest of) pillar-like projections.

The connector housing 2 is made of an insulative resin or the like, and the casing receiving recess 4 is formed in this connector housing.

In this embodiment, the connector housing 2 comprises a member of a generally square tubular shape flattened in a direction of the width thereof, and the casing receiving recess 4 is formed in a rear portion of this connector housing, and has a rear opening.

The casing body portion 21 of the shield casing 20 is inserted into the casing receiving recess 4 through this rear opening. In this condition, the radiating portion 25 is disposed in the rear opening of the casing receiving recess 4, and is exposed to the exterior.

The connector housing 2 has a support plate portion 2p provided in a projected manner at a lower end of the casing receiving recess 4, and this support plate portion 2p serves to support the shield casing 20 from the lower side, and a notch portion 2pa for passing the lead portions Db of the optical element D therethrough is formed in a rear end of the support plate portion 2p.

When the shield casing 20 is received in the casing receiving recess 4, the lead portions Db of the optical element D, extending downwardly from the shield casing 20, pass through the notch portion 2pa, and extend downwardly beyond the connector housing 2.

The shield casing 20 is received and held in the casing receiving recess 4 in such a manner that this shield casing 20 rests at its lower edge on the support plate portion 2p and that engagement projections 20a on the shield casing 20 are engaged respectively with engagement portions 2a on the connector housing 20.

The front portion of the connector housing 2 is formed into a connection portion 3 of a generally square tubular shape for fitting on the mating optical connector 40. The engagement portion 3a, with which the retaining piece portion 43 of the mating optical connector 40 is engageable, is formed at an upper plate of the connection portion 3. The optical connector 40 is fitted into the connection portion 3 of the connector housing 2 to be connected thereto, with the retaining piece portion 43 engaged with the engagement portion 3a, and by doing so, the mutually-connected condition of the optical connector 1 and the optical connector 40 is maintained.

Within the connector housing 2, an internal space of the connection portion 3 is in communication with the casing receiving recess 4. The guide sleeve portion 23 of the shield casing 20, positioned and held in the casing receiving recess 4, projects forwardly within the connection portion 3 in a direction away from the inner end thereof. When the optical connector 1 and the optical connector 40 are connected together, the ferrule portion 45 is inserted into the guide sleeve portion 23 within the connection portion 3, and is guided toward the optical coupling portion Dc of the optical element D received in the casing body portion 21.

Screw-fastening fixing piece portions 30 for being fastened to a mounting board P by screws are formed integrally on the shield casing 20. These screw-fastening fixing piece portions 30 are, of course, made of the same material (that is, the metal material) as that of the shield casing 20.

In this embodiment, the pair of screw-fastening fixing piece portions 30 are formed in a projected manner on opposite sides of the shield casing 20, respectively. Each screw-fastening fixing piece portion 30 includes a plate-like portion 31, extending outwardly from the corresponding side surface of the shield casing 20 at a lower edge thereof, and a screw fastening portion 32 of a short cylindrical shape formed on the plate-like portion 31. Abeforehand-threaded screw hole 32h is formed in the screw fastening portion 32. When the shield casing 20 is received in the casing receiving recess 4, the screw-fastening fixing piece portions 30 pass respectively through slits 4g, formed respectively in opposite side plates of the casing receiving recess 4, and project outwardly respectively from the opposite side surfaces of the connector housing 2.

A pair of screw fastening portions 10 are formed on the opposite side surfaces of the connector housing 2, respectively, and can lie under the screw-fastening fixing piece portions 30, respectively. Each screw fastening portion 10 has a reception portion 12 formed on a plate-like portion 11, and this reception portion 12 has an inner side surface conforming in shape to the outer peripheral surface of the screw fastening portion 32. A screw passage hole 11h (see Fig. 4) to be aligned with the corresponding screw hole 32h is formed through the plate-like portion 11.

When the shield casing 20 is received in the casing receiving recess 4, the plate-like portions 31 of the screw-fastening fixing piece portions 30 are superposed on the plate-like portions 11 of the screw fastening portions 10, respectively, and also the screw fastening portions 32 are received in the reception portions 12, respectively.

The optical connector 1 of the above construction is assembled, and is fixedly mounted on the mounting board P in the following manner.

First, the optical element D is inserted into the shield casing 20 to be received therein, and this shield casing 20 is inserted into the casing receiving recess 4 through the rear opening in the connector housing 2, and is received therein. At this time, the plate-like portions 31 of the screw-fastening fixing piece portions 30 are superposed on the plate-like portions 11 of the screw fastening portions 10, respectively, and also the screw fastening portions 32 are received in the reception portions 12, respectively.

Then, the optical connector 1 is placed on the mounting board P, and the screw passage hole 11h in each screw fastening portion 10 and the screw hole 32h in the corresponding screw-fastening fixing piece portion 30 are disposed on a corresponding through hole Ph formed through the mounting board P, and in this condition each of the pair of screws S, made of metal, is passed through the corresponding through hole Ph and screw passage hole 11h from the lower side of the mounting board p, and is threaded into the corresponding screw hole 32h for fastening purposes, and as a result, the connector housing 2 and the shield casing 20 are screw-fastened and fixed to the mounting board P.

In this condition, the screws S are disposed in contact with a grounding wiring circuit Pe formed on the reverse surface of the mounting board P, and the shield casing 20 is connected to the grounding wiring circuit Pe via their screw-fastening fixing piece portions 30 and the screws S.

The lead portions Db of the optical element D are passed respectively through corresponding through holes, formed through the mounting board P, and are suitably soldered to predetermined wiring circuits formed on the reverse surface of the mounting board P.

In the optical connector 1 of the above construction, the whole of the shield casing 20 is made of the metal material superior in electrical conductivity to an electrically-conductive resin as used in the conventional shield casing, and therefore the electromagnetic noise-blocking properties are excellent. And besides, the guide sleeve portion 23 is formed integrally on the casing body portion 21 for receiving the optical element D, and therefore the outer side of the hole, through which the optical coupling portion Dc of the optical element D is exposed to the exterior, is surrounded by the guide sleeve portion 23, and the intrusion of electromagnetic noises through this hole is prevented by the guide sleeve portion 23. Thus, the electromagnetic noise-blocking properties are excellent also in this respect.

In addition, the radiating portion 25, disposed to be exposed to the exterior of the connector housing 2, is formed integrally on the casing body portion 21, and therefore heat, generated by the optical element D, is radiated from the radiating portion 25 to the exterior, and therefore the excellent radiating properties are obtained.

Since the radiating portion 25 and the guide sleeve portion 23 are formed integrally on the casing body portion 21, the shield casing 20 has an increased overall volume. Therefore, it can be expected that heat, generated by the optical element D, is efficiently absorbed because of the increased heat capacity of the shield casing 20, thereby suppressing the temperature rise of the optical element D, and besides the effective radiation of the heat from the shield casing 20 to the exterior can be expected because of the increased surface area of this shield casing.

The shield casing 20 has the screw-fastening fixing piece portions 30 for being screw-fastened to the mounting board P, and therefore the screws S for screw-fastening purposes are held in contact with the grounding wiring circuit Pe on the mounting board P or the like, and by doing so, the shield casing 20 can be positively grounded, and besides its grounding resistance can be reduced.

The beforehand-threaded screw hole 32h is formed through each of the screw-fastening fixing piece portions 30, and therefore the screw-fastening operation is easy.

In the optical connector of the present invention, the whole of the shield casing is made of the metal material superior in electrical conductivity to an electrically-conductive resin as used in the conventional shield casing, and therefore the electromagnetic noise-blocking properties are excellent. And besides, the guide sleeve portion is formed integrally on the casing body portion for receiving the optical element, and therefore the outer side of the window portion, through which the optical coupling portion of the optical element is exposed to the exterior, is surrounded by the guide sleeve portion, and the intrusion of electromagnetic noises through this window portion is prevented by the guide sleeve portion. Thus, the electromagnetic noise-blocking properties are excellent also in this respect.

In addition, the radiating portion, disposed to be exposed to the exterior of the connector housing, is formed integrally on the casing body portion, and therefore heat, generated by the optical element, is radiated from the radiating portion to the exterior, and therefore the excellent radiating properties are obtained.

In the optical connector of this invention, the shield casing has the screw-fastening fixing piece portions for being screw-fastened to the mounting board, and therefore the screws for screw-fastening purposes are held in contact with the mounting board or the like, and by doing so, the shield casing can be positively grounded, and besides its grounding resistance can be reduced.

In this invention, the beforehand-threaded screw hole is formed through each of the screw-fastening fixing piece portions, and by doing so, the screw-fastening of the optical connector can be easily effected.

In this invention, the radiating portion includes the plurality of radiating projections projecting outwardly, and with this construction, heat can be efficiently radiated from this radiating portion.

In this invention, in the case where the thermally-conductive interposing material is interposed between the outer surface of the element body portion and the inner surface of the casing body portion, heat, generated by the element body portion, is easily transferred to the casing body portion through the thermally-conductive interposing material, and is radiated from the radiating portion to the exterior, and therefore the heat-radiating effect for the optical element is excellent.

In the shield casing of this invention, the whole of the shield casing is made of the metal material superior in electrical conductivity to an electrically-conductive resin as used in the conventional shield casing, and therefore the electromagnetic noise-blocking properties are excellent. And besides, the guide sleeve portion is formed integrally on the casing body portion for receiving the optical element, and therefore the outer side of the window portion, through which the optical coupling portion of the optical element is exposed to the exterior, is surrounded by the guide sleeve portion, and the intrusion of electromagnetic noises through this window portion is prevented by the guide sleeve portion. Thus, the electromagnetic noise-blocking properties are excellent also in this respect.

In addition, the radiating portion, disposed to be exposed to the exterior of the connector housing, is formed integrally on the casing body portion, and therefore heat, generated by the optical element, is radiated from the radiating portion to the exterior, and therefore the excellent radiating properties are obtained.

### - The Second Preferred Embodiment -

A Second preferred embodiment of an optical connector device of this invention will now be described.

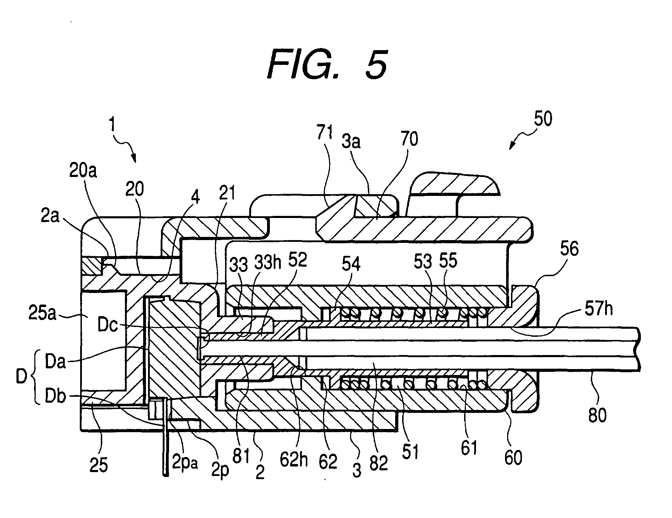

As shown in Fig. 5, this optical connector device comprises a combination of an optical connector 50 (for an optical fiber 80) and an optical connector 1 (for an optical element D).

As shown in Fig. 5, the optical connector 50 for the optical fiber 81, comprises a ferrule 51, and a ferrule-holding housing 60.

The ferrule 51 is made of an electrically-conductive material (a metal material, such as brass, in this embodiment) , and is so formed as to fit on an end portion of the optical fiber 81.

More specifically, the ferrule 51 includes a smaller-diameter portion 52 (into which an exposed portion of the optical fiber 81, disposed at an end portion of an optical fiber cord 80, can be inserted), and a larger-diameter portion 53 into which that portion of a sheath 82, disposed adjacent to the exposed portion of the optical fiber 81, can be inserted. A flange 54 is formed on an outer peripheral surface of a predetermined portion of the larger-diameter portion 53 over the entire periphery thereof. The optical fiber cord 80, having the optical fiber 81 exposed at the end portion thereof, is passed through the ferrule 51 from the rear side thereof, and that portion of the optical fiber 81, exposed at this end portion, is inserted into the smaller-diameter portion 52 while that portion of the sheath 82, disposed adjacent to this exposed fiber portion, is inserted into the larger-diameter portion 53, and the optical fiber cord 80 is fixed by the use of an adhesive or the like. Thus, the ferrule 51 is fittingly mounted on the end portion of the optical fiber cord 80. The end of the optical fiber 81 is processed into a specular surface at the distal end of the ferrule 51.

The ferrule-holding housing 60 holds the ferrule 51, and in this condition this housing can be connected to the optical connector 1 for the optical element D.

More specifically, the ferrule-holding housing 60 is made of an insulative resin or the like, and a ferrule receiving hole portion 61, within which the ferrule 51 can be received, is formed in the ferrule-holding housing 60. The ferrule receiving hole portion 61 has such an inner diameter as to pass the flange 54 of the ferrule 51 therethrough. A flange 62 is formed on the inner surface of the ferrule receiving hole portion 61, and has a guide hole 62h through which the larger-diameter portion 53 of the ferrule 51 can pass. When the ferrule 51 is inserted into the ferrule receiving hole portion 61 from the rear side thereof, and is received therein, an inner peripheral surface of the guide hole 62h is held in sliding contact with the outer peripheral surface of that portion of the larger-diameter portion 53, disposed forwardly of the flange 54, thereby positioning and guiding the ferrule 51.

A coil spring 55 is fitted on that portion of the larger-diameter portion 53 of the ferrule 51 extending rearwardly from the flange 54, and a spring stopper 56 is fitted in a rear opening of the ferrule receiving hole portion 61. When the ferrule 51 is received in the ferrule receiving hole portion 61, the coil spring 55, fitted on the larger-diameter portion 53, is interposed between the flange 54 of the ferrule 51 and the spring stopper 56 in a slightly-compressed condition. With this construction, the ferrule 51 is urged toward the front end of the ferrule-holding housing 60, that is, into a position where the flange 54 of the ferrule 51 is engaged with the flange 62 of the ferrule receiving hole portion 61. A lead-out hole 57h is formed in the spring stopper 56, and the optical fiber cord 80, extending rearwardly from the ferrule 51, passes through this lead-out hole 57h, and is extended rearwardly from the optical connector 50.

A retaining piece portion 70 is formed at an upper portion of the ferrule-holding housing 60, and when a retaining projection 71, formed at a distal end thereof, is engaged with an engagement portion 3a of the optical connector 1, the mutually-connected condition of this optical connector 50 and the optical connector 1 is maintained.

In the optical connector 1 for the optical element D, a shield casing 20 is received in an element-receiving housing 2 as shown in Figs. 1, 2, 4 and 5.

The shield casing 20 includes a casing body portion 21 for receiving the optical element D, and a guide sleeve portion 23 is formed integrally on this casing body portion.

More specifically, the casing body portion 21 has a generally box-shape with an open bottom, and when an element body portion Da of the optical element D is inserted into this casing body portion from the bottom opening thereof, the whole of the element body portion Da is covered with the casing body portion 21. In this condition, lead portions Db, extending downwardly from a lower surface of the element body portion Da, extend downwardly through the bottom opening in the casing body portion 21.

The guide sleeve portion 23 is formed into a generally tubular shape so as to receive the ferrule 51, and guides the end surface of the optical fiber 81, held in the ferrule 51, toward an optical coupling portion (a light-emitting surface or a light-receiving surface) Dc of the element body portion Da received in the casing body portion 21.

More specifically, the guide sleeve portion 23 is in the form of a short, generally-cylindrical tube projecting from a front surface of the casing body portion 21. A guide hole portion 23h is formed in this guide sleeve portion 23, and extends forwardly of the optical coupling portion Dc of the element body portion Da received in the casing body portion 21. The smaller-diameter portion 52 of the ferrule 51 can be inserted into the guide hole portion 23h. When the distal end portion of the smaller-diameter portion 52 of the ferrule 51 is inserted into the guide sleeve portion 23, the optical fiber 81 within the ferrule 51 is guided toward the optical coupling portion Dc of the element body portion Da within the casing body portion 21. When the ferrule 51 is inserted into the deepest portion of the guide sleeve portion 23, the end surface of the optical fiber 81, exposed to the distal end of the ferrule 51, is disposed in opposed relation to the optical coupling portion Dc, so that the optical fiber 81 is optically coupled to the optical element D.

In this embodiment, a radiating portion 25 is formed integrally on the casing body portion 21, and when the casing body portion 21 is received in the element-receiving housing 2, this radiating portion 25 is exposed to the exterior of the element-receiving housing 2.

The radiating portion 25 is formed at the casing body portion 21 over an entire area of the rear surface thereof, and comprises a plurality of radiating projections 25a projecting outwardly. The radiating projections 25a function to increase the surface areas of those portions of the radiating portion 25 exposed to the exterior, thereby enhancing its radiating effect. In this embodiment, the radiating projections 25a are a plurality of parallel, spaced fin-like projections. The radiating projections 25a may be a plurality of (that is, a forest of) pillar-like projections.

The whole of the shield casing 20 is made of a metal material.

With this construction, the element body portion Da of the optical element D is covered with the casing body portion 21 having electrical conductivity, and external electromagnetic noises are prevented from acting on the element body portion Da, and also electromagnetic noises are prevented from being applied from the element body portion Da to the exterior. When the ferrule 51 is inserted into the guide sleeve portion 23, the outer peripheral surface of the ferrule 51 contacts the inner peripheral surface of the guide sleeve portion 23, so that the ferrule 51 is electrically connected to the guide sleeve portion 23, and the ferrule 51 is grounded via this shield casing 20 (The grounding construction of the shield casing 20 will be described later).

The whole of the shield casing 20 may be made of an electrically-conductive resin formed by adding an electrically-conductive filler to a resin. In this case, with the use of a commonly-used electrically-conductive resin, a skin, which does not contain any electrically-conductive filler, but is composed solely of an insulative resin, is formed on the surface of the molded product, and the positive electrical contact can not be obtained between the ferrule 51 and the guide sleeve portion 23. Therefore, it is necessary to use, for example, an electrically-conductive resin, formed by adding solder, Cu or the like to a PBT (polybutylene terephthalate) or an ABS (acrylonitrile-butadiene copolymer), or an electrically-conductive resin of such a nature that a skin, which does not contain any electrically-conductive filler, but is composed solely of an insulative resin, is not formed on the surface of the molded product. With the use of such a resin, a contact resistance between the ferrule 51 and the guide sleeve 23 can be reduced to not larger than 1 Ω.

Metal plating may be applied to the surface of the shield casing (molded product) 21 molded of an insulative resin. In this case, it is not always necessary to apply the metal plating to the molded product over the entire surface thereof, but it is only necessary to apply the metal plating to that portion of the casing body portion 21, which blocks electromagnetic noises acting between the optical element D and the exterior, and also to those portions, forming a grounding path from that portion of the guide sleeve portion 23, which is to be connected to the ferrule 51, to that portion of the shield casing 20 to be connected to the ground. For example, the metal plating may be applied to the grounding path portions formed by the inner peripheral surface of the guide sleeve portion 23, the inner surface of the casing body portion 21 and inner surfaces of screw holes 32h formed respectively in screw-fastening fixing piece portions 30.

This shield casing 20 is grounded by the predetermined grounding structure.

In this embodiment, the optical connector 1 for the optical element D is mounted on and fixed to a predetermined mounting board P. The screw-fastening fixing piece portions 30 are formed on the shield casing 20, and these portions 30 are screw-fastened to the mounting board P, and are electrically connected to a grounding wiring circuit Pe (see Fig. 4) formed on this mounting board P.

More specifically, the pair of screw-fastening fixing piece portions 30 are formed in a projected manner on opposite sides of the shield casing 20, respectively. Each screw-fastening fixing piece portion 30 includes a plate-like portion 31, extending outwardly from the corresponding side surface of the shield casing 20 at a lower edge thereof, and a screw fastening portion 32 of a short cylindrical shape formed on the plate-like portion 31. The beforehand-threaded screw hole 32h is formed in the screw fastening portion 32. The screw-fastening fixing piece portions 30 are made of the same material (the metal material in this embodiment) as that of the shield casing 20.

When the shield casing 20 is received in the element-receiving housing 2, the screw-fastening fixing piece portions 30 pass respectively through slits 4g, formed respectively in opposite side walls of this housing, and project outwardly respectively from the opposite side surfaces of the element-receiving housing 2, and are superposed respectively on screw fastening piece portions 10 (described later) formed on and projecting respectively from the opposite side surfaces of the element-receiving housing 2.

Screws S are passed respectively through a pair of screw passage holes Ph, formed through the mounting board P, from the lower side thereof, and each screw S is passed through a screw passage hole 11h formed through the corresponding screw fastening piece portion 10, and is threaded into the screw hole 32h in the corresponding screw-fastening fixing piece portion 30 (see Fig. 4).

In this condition, each of the screws S is disposed in electrical contact with the grounding wiring circuit Pe formed on the reverse surface of the mounting board P, and is also disposed in electrical contact with the corresponding screw-fastening fixing piece portion 30 through that portion thereof threaded in the screw hole 32h. Therefore, the shield casing 20 is connected to the grounding wiring circuit Pe via their screw-fastening fixing piece portions 30 and the screws S.

The construction of grounding the shield casing 20 is not limited to the above structure. For example, there may be used a construction in which when the shield casing 20 is screw-fastened to the mounting board P, the bottom surface of the shield casing 20 is press-contacted with a grounding wiring circuit Pe formed on the surface of the mounting board P, and this shield casing is grounded via this press-contacted portion. As another alternative, there may be used a construction in which a soldering portion for contact with a grounding wiring circuit Pe, formed on the surface of the mounting board P, is formed on the shield casing 20, and the shield casing is grounded by soldering this soldering portion.

The element-receiving housing 2 is made of an insulative resin or the like, and a casing receiving recess 4 is formed in this housing.

In this embodiment, the element-receiving housing 2 comprises a member of a generally square tubular shape flattened in a direction of the width thereof, and the casing receiving recess 4 is formed in a rear portion of this connector housing, and has a rear opening.

The casing body portion 21 of the shield casing 20 is inserted into the casing receiving recess 4 through this rear opening. In this condition, the radiating portion 25 is disposed in the rear opening of the casing receiving recess 4, and is exposed to the exterior.

The element-receiving housing 2 has a support plate portion 2p provided in a projected manner at a lower end of the casing receiving recess 4, and this support plate portion 2p serves to support the shield casing 20 from the lower side, and a notch portion 2pa for passing the lead portions Db of the optical element D therethrough is formed in a rear end of the support plate portion 2p.

When the shield casing 20 is received in the casing receiving recess 4, the lead portions Db of the optical element D, extending downwardly from the shield casing 20, pass through the notch portion 2pa, and extend downwardly beyond the element-receiving housing 2.

The shield casing 20 is received and held in the casing receiving recess 4 in such a manner that this shield casing 20 rests at its lower edge on the support plate portion 2p and that engagement projections 20a on the shield casing 20 are engaged respectively with engagement portions 2a on the element-receiving housing 2.

The front portion of the element-receiving housing 2 is formed into a connection portion 3 of a generally square tubular shape for fitting on the optical connector 50 for the optical fiber 81. The engagement portion 3a, with which the retaining piece portion 70 of the optical connector 50 is engageable, is formed at an upper plate of the connection portion 3. The optical connector 50 is fitted into the connection portion 3 of the element-receiving housing 2 to be connected thereto, with the retaining piece portion 70 engaged with the engagement portion 3a, and by doing so, the mutually-connected condition of the optical connector 1 and the optical connector 50 is maintained.

Within the element-receiving housing 2, an internal space of the connection portion 3 is in communication with the casing receiving recess 4. The guide sleeve portion 23 of the shield casing 20, positioned and held in the casing receiving recess 4, projects forwardly within the connection portion 3 in a direction away from the inner end thereof. When the optical connector 1 and the optical connector 50 are connected together, the ferrule 51 is inserted into the guide sleeve portion 23 within the connection portion 3, and is guided toward the optical coupling portion Dc of the optical element D received in the casing body portion 21.

The pair of screw fastening piece portions 10 are formed on the opposite side surfaces of the element-receiving housing 2, respectively, and can lie under the screw-fastening fixing piece portions 30, respectively. Each screw fastening piece portion 10 has a reception portion 12 formed on a plate-like portion 11, and this reception portion 12 has an inner side surface conforming in shape to the outer peripheral surface of the screw fastening portion 32. The screw passage hole 11h to be aligned with the corresponding screw hole 32h is formed through the plate-like portion 11 (see Fig. 4).

When the shield casing 20 is received in the casing receiving recess 4, the plate-like portions 31 of the screw-fastening fixing piece portions 30 are superposed on the plate-like portions 11 of the screw fastening piece portions 10, respectively, and also the screw fastening portions 32 are received in the reception portions 12, respectively.

The optical connector 1 for the optical element is assembled, and is fixedly mounted on the mounting board P in the following manner.

First, the optical element D is inserted into the shield casing body 21 of the shield casing 20 to be received therein, and this shield casing 20 is inserted into the casing receiving recess 4 to be received therein. At this time, the screw-fastening fixing piece portions 30 are superposed on the screw fastening piece portions 10, respectively.

Then, the optical connector 1 is placed on the mounting board P, and the screw passage hole 11h in each screw fastening piece portion 10 and the screw hole 32h in the corresponding screw-fastening fixing piece portion 30 are disposed on the corresponding screw passage hole Ph formed through the mounting board P, and in this condition each of the pair of screws S, made of metal, is passed through the corresponding screw passage hole Ph and screw passage hole 11h from the lower side of the mounting board p, and is threaded into the corresponding screw hole 32h for fastening purposes. As a result, the optical connector 1 is mounted on and fixed to the mounting board P. At this time, the shield casing 20 is grounded to the grounding wiring circuit Pe via the screw-fastening fixing piece portions 30 and the screws S. The lead portions Db of the optical element D are passed respectively through corresponding through holes, formed through the mounting board P, and are suitably soldered to predetermined wiring circuits formed on the reverse surface of the mounting board P.

When the optical connector 50 for the optical fiber 81 is connected to the optical connector 1 (for the optical element 10) thus fixedly mounted on the mounting board P, the distal end portion of the ferrule-holding housing 60 of the optical connector 50 is first fitted into the connection portion 3 of the optical connector 1, and at the same time the smaller-diameter portion 52 of the ferrule 51, projecting from the distal end of the ferrule-holding housing 60, is inserted into the guide sleeve portion 23. When the optical connector 50 is further inserted deeper, the end surface of the optical fiber 81, held in the ferrule 51, is guided toward the optical coupling portion Dc of the element body portion Da within the shield casing 20 by the guide sleeve portion 23. This connecting operation is completed when the optical connector 1 is inserted deep into a position where the retaining piece portion 70 becomes engaged with the engagement portion 3a of the optical connector 1. In this condition, the end surface of the optical fiber 81 is disposed in opposed relation to the optical coupling portion Dc, so that the optical fiber 81 is optically coupled to the optical element D. In this condition, the smaller-diameter portion 52 of the ferrule 51, defined by the front end portion of this ferrule, is fitted in (that is, connected to) the guide sleeve portion 23, and the outer peripheral surface of the ferrule 51 is held in contact with the inner peripheral surface of the guide sleeve portion 23, so that the two are electrically connected together. Therefore, the ferrule 51 is connected to the grounding wiring circuit Pe of the mounting board P via the guide sleeve portion 23, the casing body portion 21, the pair of screw-fastening fixing piece portions 30 and the screws S, that is to say, the ferrule 51 is grounded via the shield casing 20.

In the optical connector device of the above construction, when the optical connector 50 for the optical fiber 81 is connected to the optical connector 1 for the optical element D, the ferrule 51 is inserted into the guide sleeve portion 23 to be electrically connected to this guide sleeve portion 23, so that this ferrule 51 is connected to the ground via the shield casing 20. Therefore, electromagnetic waves, absorbed by the ferrule 51, can be caused to escape to the ground via the shield casing 20, and the electromagnetic waves, radiated from the ferrule 51, can be suppressed.

And besides, electromagnetic noises, passing through the guide hole portion 23h in the guide sleeve portion 23, can be absorbed by the ferrule 51 inserted in the guide sleeve portion 23, so that anti-noise properties can be enhanced.

Furthermore, since the guide sleeve portion 23 is formed integrally on the casing body portion 21, the shield casing 20 has an increased overall volume. Therefore, it can be expected that heat, generated by the optical element D, is efficiently absorbed because of the increased heat capacity of the shield casing 20, thereby suppressing the temperature rise of the optical element D, and besides the effective radiation of the heat from the shield casing 20 to the exterior can be expected because of the increased surface area of this shield casing. This is effective particularly when the shield casing 20 is formed of a metal material.

In the optical connector of the present invention, when the optical fiber-side optical connector is connected to the optical element-side optical connector, the ferrule is inserted into the guide sleeve portion to be electrically connected to this guide sleeve portion, so that this ferrule is connected to the ground via the shield casing. Therefore, electromagnetic waves, absorbed by the ferrule, can be caused to escape to the ground via the shield casing, and the electromagnetic waves, radiated from the ferrule, can be suppressed.

And besides, electromagnetic noises, passing through the guide sleeve portion, can be absorbed by the ferrule inserted in the guide sleeve portion, so that anti-noise properties can be enhanced.

## Claims

1. An optical connector comprising:
a connector housing having a casing receiving recess formed therein, and
a shield casing including a casing body portion, a guide sleeve portion and a radiating portion, which are made of metal and formed integrally;
wherein
the casing body portion is accommodated in the casing receiving recess, holding an element body portion of an optical element therein;
the guide sleeve portion guides an optical fiber toward the element body portion; and
the radiating portion is exposed to the exterior of the connector housing.

2. The optical connector according to claim 1 wherein the shield casing further includes screw-fastening fixing piece portions for fixing the shield casing to a mounting board.

3. The optical connector according to claim 2 wherein a threaded screw hole is formed in the screw-fastening fixing piece portions.

4. The optical connector according to claim 1 wherein the radiating portion includes a plurality of radiating projections exposed to the exterior of the connector housing.

5. The optical connector according to claim 1 wherein a thermally-conductive material is disposed between an outer surface of the element body portion and an inner surface of the casing body portion.

6. A shield casing for being incorporated in a connector housing, comprising: a case body portion, a guide sleeve portion and a radiating portion, which are made of metal and formed integrally,
wherein the casing body portion is accommodated in the casing receiving recess, holding an element body portion of an optical element therein;
the guide sleeve portion guides an optical fiber toward the element body portion; and
the radiating portion is exposed to the exterior of the connector housing.

7. An optical connector device comprising:
a first optical connector holding a ferrule provided at an end portion of an optical fiber, and
a second optical connector having an optical element and a shield casing received in an element-receiving housing,
wherein the shield casing comprises:
a case body portion holding the optical element, and
a guide sleeve portion capable of receiving the ferrule to guide an end of the optical fiber toward the optical element; and
the ferrule is inserted into the guide sleeve portion to be electrically connected to the shield casing and grounded via the shield casing.

8. The optical connector device according to claim 7 wherein the ferrule is made of metal.

9. The optical connector device according to claim 7 wherein the guide sleeve portion is formed into a tubular shape to receive the ferrule.

10. The optical connector device according to claim 7, wherein the shield casing has electrical conductivity at least on its surface.

11. The optical connector device according to claim 10 wherein the whole of the shield casing is made of a metal material or an electrically-conductive resin having electrical conductivity on its surface.

12. The optical connector device according to claim 10 wherein the shield casing is made of an insulative resin, and is plated on its surface with a metal material.

13. The optical connector device according to claim 7
wherein the shield case has a screw-fastening fixing piece portion to be fixed to a mounting board; and
the shield case is connected to a grounding wiring circuit formed on the mounting board via the screw-fastening fixing piece portion.

14. The optical connector device according to claim 7
wherein the shield case has a soldering portion to be soldered to a mounting board; and
the shield case is connected to a grounding wiring circuit formed on the mounting board via the soldering portion.
